# EUROPÄISCHE PATENTANMELDUNG

(11) **EP 4 431 282 A1**
(43) Veröffentlichungstag der Anmeldung: **18.09.2024**
(21) Anmeldenummer: 23161987.5
(22) Anmeldetag: 15.03.2023
(51) Int. Cl.: B33Y 10/00, B33Y 30/00, B33Y 70/00, B33Y 80/00, C04B 35/565, C04B 35/80, C04B 35/577, C04B 35/52, C04B 35/528, C04B 35/634, C04B 35/636, C04B 35/83

(54) **VERFAHREN ZUR HERSTELLUNG EINES FASERVERSTÄRKTEN DREIDIMENSIONALEN KERAMIKBAUTEILS**

(71) Anmelder: Kyocera Fineceramics Europe GmbH, 68229 Mannheim (DE)
(72) Erfinder: Da Lima, Pedro Silva, 95111 Rehau (DE); Katsikis, Nikolaos, 95100 Selb (DE); Diener, Sarah, 95100 Selb (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Herstellung eines faserverstärkten dreidimensionalen Keramikbauteils, das eine gezielte Orientierung der Verstärkungsfasern erlaubt, einen Schlicker zur Verwendung in dem erfindungsgemäßen Verfahren sowie eine Vorrichtung zur Durchführung des erfindungsgemäßen Verfahrens.

## Beschreibung

Die vorliegende Erfindung betrifft ein Verfahren zur Herstellung eines faserverstärkten dreidimensionalen Keramikbauteils, das eine gezielte Orientierung der Verstärkungsfasern erlaubt, einen Schlicker zur Verwendung in dem erfindungsgemäßen Verfahren sowie eine Vorrichtung zur Durchführung des erfindungsgemäßen Verfahrens.

Verbundwerkstoffe bestehen aus einer Matrix und Verstärkungsfasern und sind vor allem wegen ihrer mechanischen Eigenschaften geschätzt, die sich aus dem Wechselspiel zwischen den Verstärkungsfasern und der sie umgebenden Matrix ergeben. Während natürliche Verbundwerkstoffe, die oft aus komplexen Faseranordnungen in kontinuierlichen Matrizen entstehen, außergewöhnliche mechanische Eigenschaften aufweisen können, sind die mechanischen Eigenschaften synthetischer Verbundwerkstoffe durch die einseitige Orientierung der Fasern in der Regel richtungsabhängig. Zwar bieten additive Fertigungsverfahren eine große Flexibilität bei der Herstellung maßgesteuerter dreidimensionaler Bauteile, sie stoßen aber bei Fasergehalt und gerichtetem Einbringen der Fasern an ihre Grenzen.

J.R. Raney et al beschreiben in ihrem Artikel "Rotational 3D printing of damagetolerant composites with programmable mechanics", erschienen in PNAS, Vol. 115, Nr. 6, Seiten 1198-1203, ein 3D-Rotationsdruckverfahren, das die räumlich kontrollierte Ausrichtung von Fasern in Polymermatrizen durch Variation der Düsenrotationsgeschwindigkeit im Verhältnis zur Druckgeschwindigkeit ermöglichen soll. Mit dieser Methode sollen Verbundwerkstoffe zugänglich sein, die aus Volumeneinheiten mit programmierbar definierten Faseranordnungen bestehen, einschließlich benachbarter Bereiche von orthogonal und helikal orientierten Fasern.

Das von J.R. Raney beschriebene Verfahren weist die Nachteile auf, dass nur Polymere eingesetzt werden, die Länge der Fasern durch die Schichtdicke beim Drucken begrenzt ist und die Fasern nicht über die Schichtgrenzen hinaus eingebracht werden können.

Zwar kann durch den lagenweisen Schichtaufbau eine höhere Beladung mit Fasern erreicht werden, die Orientierung der Fasern erfolgt jedoch immer in Auftragsrichtung. Der Einsatz von Fasern bietet daher nur einen Nutzen bei eindimensionaler Belastungsrichtung da alle Fasern einheitlich in x-Richtung orientiert sind. Eine Verstärkung bei unidirektionaler Belastung erfolgt dagegen kaum.

Es wäre daher wünschenswert, ein Verfahren zur Verfügung zu haben, das die Möglichkeit bietet, die Fasern nicht nur in x-Richtung, sondern auch in y- und z-Richtung sowie in Zwischenstellungen zu orientieren und dies möglichst anpassbar über die Bauteilhöhe.

Auf diesen Bedarf reagiert die vorliegende Erfindung mit der Bereitstellung eines Verfahrens, das eine unterschiedliche Orientierung von Fasern erlaubt und die Möglichkeit schichtübergreifender Fasern bietet.

Daher ist ein erster Gegenstand der vorliegenden Erfindung ein Verfahren zur Herstellung eines faserverstärkten Bauteils mittels additiver Fertigung, wobei das Verfahren den schichtweisen Aufbau des Bauteils aus einem pulverförmigen Material umfasst, dadurch gekennzeichnet, dass zumindest zwei der Schichten eine unterschiedliche Orientierung der Fasern aufweisen.

Es wurde überraschend gefunden, dass auf diese Weise nicht nur die Konzentration der Verstärkungsfasern erhöht werden konnte, sondern auch eine gezielte Orientierung der Fasern in alle Richtungen möglich ist. Somit ist es möglich die mechanischen Eigenschaften des Bauteils, wie Schlagzähigkeit, Festigkeit, E-Modul und CTE, je nach Bedarf anzupassen und Bauteilversagen zu minimieren.

Im Rahmen des erfindungsgemäßen Verfahrens werden die Fasern vorzugsweise zusammen mit dem pulverförmigen Material bereitgestellt und mit diesem zusammen schichtförmig ausgebracht. In einer gleichberichtigt oder alternativ bevorzugten Ausführungsform werden die Fasern in eine oder mehrere bereits ausgebrachte Schichten des pulverförmigen Materials injiziert, was den Vorteil bietet, dass die Fasern unabhängig von der Ausbringungsrichtung, beispielsweise diagonal, und schichtübergreifend eingebracht werden können. In einer besonders bevorzugten Ausführungsform umfasst das erfindungsgemäße Verfahren eine Kombination dieser Methoden.

In einer bevorzugten Ausführungsform umfasst das erfindungsgemäße Verfahren die folgenden Schritte:
a) Bereitstellen einer ersten Mischung umfassend ein pulverförmiges Material und Verstärkungsfaser;
b) Ausbringen der ersten Mischung in einer ersten Schicht, wobei die Verstärkungsfasern eine erste Orientierung aufweisen;
c) Bereitstellen einer weiteren Mischung umfassend ein pulverförmiges Material und Verstärkungsfasern;
d) Ausbringen der weiteren Mischung in einer weiteren Schicht, wobei die Verstärkungsfasern eine zweite Orientierung, die unterschiedlich zur ersten Orientierung ist, aufweisen;
e) optional Wiederholen der Schritte b) und d) unter Erhalt des faserverstärkten dreidimensionalen Bauteils.

Die Orientierung der Verstärkungsfasern in x- und y-Richtung kann beispielsweise durch Änderung der Orientierung der Auftragsrichtung der Mischung relativ zur Bauplattform erfolgen. In einer bevorzugten Ausführungsform des erfindungsgemäßen Verfahrens erfolgt die unterschiedliche Orientierung der Verstärkungsfasern daher durch Änderung der Auftragsrichtung der Mischung. In einer alternativ bevorzugten Ausführungsform erfolgt die unterschiedliche Orientierung der Verstärkungsfasern im Bauteil durch Rotation der Bauplattform, auf die die Mischung ausgebracht wird. In einer besonders bevorzugten Ausführungsform erfolgt die unterschiedliche Orientierung der Verstärkungsfasern durch Änderung der Auftragsrichtung der Mischung und/oder durch Rotation der Bauplattform .

Durch die Änderung der Auftragsrichtung der Mischung kann eine freie Orientierung der Verstärkungsfasern in x- und y-Richtung erreicht werden. Wünschenswert wäre darüber hinaus eine gezielte Orientierung in z-Richtung. Es wurde überraschend gefunden, dass dies dadurch erreicht werden kann, dass Verstärkungsfasern gezielt in bereits ausbrachte Schichten injiziert werden. Daher ist eine Ausführungsform des erfindungsgemäßen Verfahrens bevorzugt, in der das Verfahren weiterhin einen Injektionsschritt umfasst, bei dem Verstärkungsfasern in eine oder mehrere ausgebrachte Schichten injiziert werden, wobei die injizierten Verstärkungsfasern vorzugsweise eine dritte Orientierung aufweisen, die sich von der Orientierung bereits gegebenenfalls bereits vorhandener Fasern unterscheidet.

Durch die Injektion der Verstärkungsfasern kann nicht nur eine Orientierung in einer weiteren Raumrichtung erreicht werden, es ist so auch möglich, Verstärkungsfasern einzubringen, die sich über mehrere Schichten erstrecken. Daher ist eine Ausführungsform des erfindungsgemäßen Verfahrens bevorzugt, in der die Injektion derart erfolgt, dass die Verstärkungsfasern sich mindestens über zwei Schichten erstrecken und diese vorzugsweise miteinander verbinden. Durch Variation des Winkels der Einschussrichtung kann so eine dreidimensionale Verteilung der Verstärkungsfasern im Bauteil erreicht werden.

Um die Eigenschaften des Bauteils bedarfsmäßig anpassen zu können, hat es sich als vorteilshaft erwiesen, unterschiedliche pulverförmige Materialien einzusetzen. Daher ist eine Ausführungsform bevorzugt, in der die eingesetzten Materialien gleich oder verschieden sind. Weiterhin können vorzugsweise zusätzliche Materialien ausgebracht werden, die keine Verstärkungsfasern aufweisen. Auf diese Weise können die mechanischen Eigenschaften des Bauteils individuell und ortsaufgelöst angepasst werden.

Das erfindungsgemäße Verfahren eignet sich besonders für die Herstellung von keramischen Bauteilen. Daher ist eine Ausführungsform bevorzugt, in der das pulverförmige Material ausgewählt ist aus der Gruppe bestehend aus den Oxiden, Carbiden und Nitriden von Metallen und Nichtmetallen. Siliziumcarbid findet aufgrund seiner Härte und hohen Temperaturstabilität eine breite Anwendung, stellt aber auch eine besondere Herausforderung bei der Verarbeitung dar. Überraschenderweise wurde gefunden, dass das erfindungsgemäße Verfahren auch für die Herstellung von Bauteilen auf Basis von Siliziumcarbid geeignet ist. Daher ist eine Ausführungsform besonders bevorzugt, in der es sich bei dem pulverförmigen Material um Siliziumcarbid handelt.

Die herkömmlichen additiven Verfahren weisen den Nachteil auf, dass die Länge der Verstärkungsfasern meist durch die Schichtdicke der ausgebrachten Schicht begrenzt ist. Es wurde im Rahmen des erfindungsgemäßen Verfahrens überraschend gefunden, dass auch längere Verstärkungsfasern eingebracht werden können und so beim versetzten Fasereintrag die einzelnen Schichten überlappend verbunden werden können. Um längere Verstärkungsfasern einbringen zu können hat es sich neben dem Injizieren als vorteilhaft erwiesen zum Erzeugen der Schicht eine Schlitzdüse zu verwenden. So können Verstärkungsfasern eingebracht werden, die aus der ausgebrachten Schicht herausstehen und von der nächsten Schicht umspült werden. Daher ist eine Ausführungsform bevorzugt, in der das Ausbringen der Mischung mit Hilfe einer Schlitzdüse erfolgt.

Im Rahmen des erfindungsgemäßen Verfahrens wurde überraschend gefunden, dass Verstärkungsfasern von einer Länge bis zu 1 mm verarbeitet werden können. In dem erfindungsgemäßen Verfahren werden vorzugsweise Verstärkungsfasern mit einer Länge von 1 mm oder weniger verwendet. Auf diese Weise kann erreicht werden, dass sich die Verstärkungsfasern über mehrere Lagen erstrecken, ohne dass die Druckpräzision beeinflusst wird.

Im Rahmen des erfindungsgemäßen Verfahrens hat sich überraschend gezeigt, dass die Beladung mit Verstärkungsfasern gegenüber herkömmlichen Verfahren deutlich erhöht werden kann. Daher ist eine Ausführungsform bevorzugt, in der der Anteil an Verstärkungsfasern 10 bis 60 Vol.-%, vorzugsweise 15 bis 55 Vol.-% beträgt, bezogen auf das Gesamtvolumen des Bauteils.

In dem erfindungsgemäßen Verfahren können gängige Verstärkungsfasern eingesetzt werden. In einer bevorzugten Ausführungsform sind die Verstärkungsfasern ausgewählt aus der Gruppe bestehend aus Glasfasern, Polymerfasern, Kohlenstofffasern und Keramikfasern, insbesondere Siliziumcarbid (SiC)-Fasern.

Es wurde überraschend gefunden, dass das erfindungsgemäße Verfahren auf klassische Pulverbettverfahren als auch auf schlickerbasierte Verfahren angewendet werden kann. Das schlickerbasierte Verfahren bietet gegenüber klassischen Pulverbettverfahren den Vorteil, dass Bauteile mit einer niedrigeren Porosität erhalten werden können. Daher ist eine Ausführungsform bevorzugt, in der das pulverförmige Material in Form eines Schlickers bereitgestellt wird, wobei der Schlicker neben dem pulverförmigen Material vorzugsweise weiterhin Verstärkungsfasern umfasst.

Im Rahmen der schlickerbasierten Ausführungsform des erfindungsgemäßen Verfahrens umfasst dieses vorzugsweise einen weiteren Schritt, in dem der Feuchtigkeitsgehalt des Schlickers reduziert wird. Der Feuchtigkeitsgehalt kann bis zu einem gewünschten Grad, insbesondere bis zur Trocknung reduziert werden. Die Reduzierung erfolgt vorzugsweise mittels thermischer Methoden und/oder mit Hilfe saugfähiger Unterlagen.

Um eine initiale Stabilität des Bauteils und eine Verbindung der einzelnen Schichten zur erreichen, können die Schichten entweder mit Hilfe eines Lasers gesintert werden. Alternative kann auch ein Binder eingesetzt werden. In einer bevorzugten Ausführungsform umfasst das erfindungsgemäße Verfahren daher weiterhin das Ausbringen eines Binders gemäß einem Querschnitt des Bauteils, wobei der Binder vorzugsweise jeweils zwischen den Pulverlagen ausgebracht wird. In einer alternativ bevorzugten Ausführungsform wird der Binder zusammen mit dem Pulver in Form einer Mischung ausgebracht. Weiterhin umfasst das erfindungsgemäße Verfahren vorzugsweise wenigstens einen Aushärtungsschritt des Binders. Das Aushärten des Binders kann auf dem Fachmann bekannte Weise erfolgen, beispielsweise thermisch oder durch Bestrahlen, beispielsweise mit einem Laser.

Das erfindungsgemäße Verfahren kann schlickerbasiert sein, wodurch Bauteile mit einer geringeren Porosität im Vergleich zum Pulverdruck erhalten werden können. Anknüpfend daran ist ein weiterer Gegenstand der vorliegenden Erfindung ein Schlicker zur Verwendung in dem erfindungsgemäßen Verfahren, wobei der Schlicker
a) Keramikpartikel, vorzugsweise SiC-Partikel;
b) Verstärkungsfasern und
c) Binder
umfasst.

Die Keramikpartikel sind vorzugsweise ausgewählt aus der Gruppe bestehend aus Oxid-Keramiken, Nitrid-Keramiken und Carbid-Keramiken und Mischungen hiervon, insbesondere Siliziumcarbid. Neben den Keramikpartikeln können weitere Bestandteile enthalten sein, insbesondere solche, die aus der Gruppe ausgewählt sind, die aus Diamantpartikeln, Graphit, Ruß und organischen Verbindungen sowie Mischungen hiervon besteht.

Die Verstärkungsfasern sind vorzugsweise ausgewählt aus der Gruppe bestehend aus Glasfasern, Kohlenstofffasern und Keramikfasern, insbesondere Siliziumcarbid (SiC)-Fasern.

Der Binder umfasst vorzugsweise eine oder mehrere der Verbindungen ausgewählt aus der Gruppe bestehend aus Harzen, insbesondere Phenolharze, Polysacchariden, Polyvinylalkohol, Cellulose und Cellulosederivaten, Ligninsulfonaten, Polyethylenglykol, Polyvinylderivaten, Polyacrylaten und Mischungen hiervon.

Ein weiterer Gegenstand der vorliegenden Erfindung ist ein Bauteil, das gemäß dem erfindungsgemäßen Verfahren erhältlich ist, wobei das Bauteil eine isotrope Orientierung und/oder Verteilung der Verstärkungsfasern aufweist.

Ein weiterer Gegenstand der vorliegenden Erfindung ist eine Vorrichtung zur Durchführung des erfindungsgemäßen Verfahrens und/oder zur Herstellung des erfindungsgemäßen Bauteils. Die Vorrichtung weist eine Ausgabeeinheit zur Ausgabe eines pulverförmigen Materials und gegebenenfalls Verstärkungsfasern und eine höhenverstellbare Aufnahmeeinheit zur Aufnahme einer Schicht des pulverförmigen Materials auf, wobei die Ausgabeeinheit und/oder die Aufnahmeeinheit in der Ebene beweglich sind, vorzugsweise rotierbar sind.

In einer bevorzugten Ausführungsform handelt es sich bei der Ausgabeeinheit um eine Düse, insbesondere eine Schlitzdüse, oder eine Rakel.

In einer weiterhin bevorzugten Ausführungsform weist die erfindungsgemäße Vorrichtung weiterhin eine Injektionseinheit zum Injizieren von Verstärkungsfasern in eine oder mehrere Schichten auf.

In einem weiteren Aspekt betrifft die vorliegende Erfindung weiterhin die Verwendung eines Schlickers zur Herstellung eines faserverstärkten Keramikbauteils mittels additiver Fertigung, vorzugsweise mittels des erfindungsgemäßen Verfahrens, wobei der Schlicker
a) Keramikpartikel, vorzugsweise SiC-Partikel;
b) Verstärkungsfasern und
c) Binder
umfasst.

Die Komponenten des Schlickers entsprechen vorzugsweise den oben beschriebenen.

Die vorliegende Erfindung wird anhand der folgenden Figuren beschrieben, wobei diese keinesfalls als Einschränkung des Erfindungsgedanken zu verstehen sind.

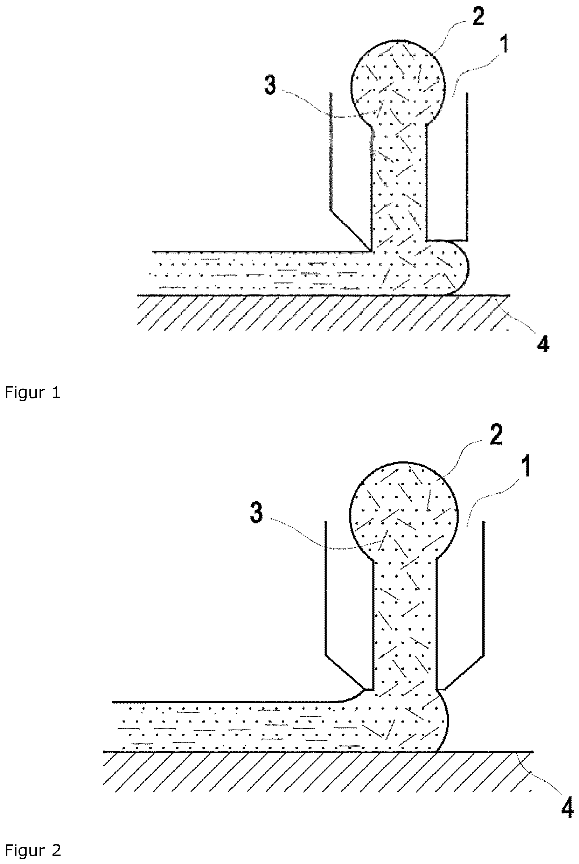

Figur 1 zeigt den schematischen Aufbau einer Ausführungsform der erfindungsgemäßen Vorrichtung mit einer Ausgabeeinheit (1) in Form einer Rakel, wobei ein pulverförmiges Material (2) mit Verstärkungsfasern (3) auf einem Substrat oder einer vorherigen Pulverschicht (4) ausgebracht wird und die Verstärkungsfasern eine erste bevorzugte Orientierung aufweisen.
Figur 2 zeigt den schematischen Aufbau einer Ausführungsform der erfindungsgemäßen Vorrichtung mit einer Ausgabeeinheit (1) in Form einer Schlitzdüse, wobei ein pulverförmiges Material (2) mit Verstärkungsfasern (3) auf einem Substrat oder einer vorherigen Pulverschicht (4) ausgebracht wird und die Verstärkungsfasern eine erste bevorzugte Orientierung aufweisen.

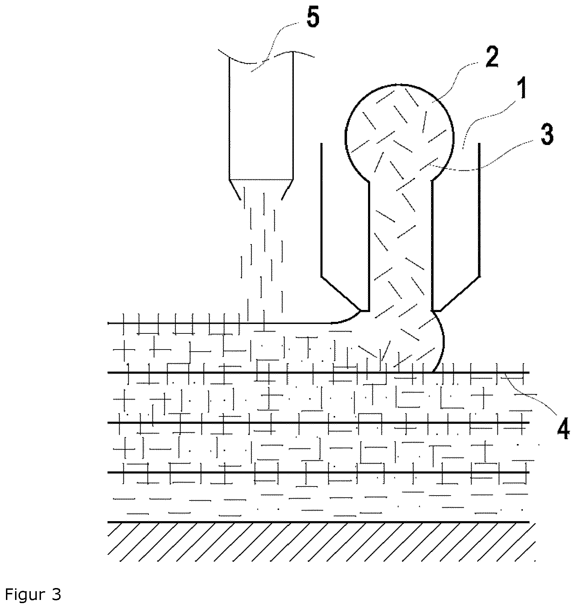

Figur 3 zeigt den schematischen Aufbau einer Ausführungsform der erfindungsgemäßen Vorrichtung mit einer Ausgabeeinheit (1) in Form einer Schlitzdüse und einer Injektionseinheit (5), wobei ein pulverförmiges Material (2) mit Verstärkungsfasern (3) auf einem Substrat oder einer vorherigen Pulverschicht (4) ausgebracht wird und die Verstärkungsfasern unterschiedliche Orientierungen aufweisen und sich die mit Hilfe der Injektionseinheit (5) eingebrachten Verstärkungsfasern (3) in z-Richtung über die Schichtdicke einer Lage hinauserstrecken.

In jeder der beschriebenen Ausführungsformen kann das pulverförmige Material (2) in Form eines Schlickers eingesetzt werden.

## Patentansprüche

1. Verfahren zur Herstellung eines faserverstärkten dreidimensionalen Bauteils mittels additiver Fertigung, wobei das Verfahren den schichtweisen Aufbau des Bauteils aus einem pulverförmigen Material umfasst, **dadurch gekennzeichnet, dass** zumindest zwei der Schichten eine unterschiedliche Orientierung der Fasern aufweisen.

2. Verfahren gemäß Anspruch 1, **dadurch gekennzeichnet, dass** die Verstärkungsfasern zusammen mit dem pulverförmigen Material bereitgestellt und zusammen mit diesem schichtförmig ausgebracht werden und/oder die Verstärkungsfasern mittels Injektion in eine oder mehrere Schichten eingebracht werden.

3. Verfahren gemäß wenigstens einem der vorangehenden Ansprüche, **dadurch gekennzeichnet, dass** die unterschiedliche Orientierung der Verstärkungsfasern durch Änderung der Auftragsrichtung des pulverförmigen Materials erfolgt.

4. Verfahren gemäß wenigstens einem der vorangehenden Ansprüche, **dadurch gekennzeichnet, dass** sich die Verstärkungsfasern mindestens über zwei Lagen erstrecken.

5. Verfahren gemäß wenigstens einem der vorangehenden Ansprüche, **dadurch gekennzeichnet, dass** die Verstärkungsfasern eine Länge von 1 mm oder weniger aufweisen.

6. Verfahren gemäß wenigstens einem der vorangehenden Ansprüche, **dadurch gekennzeichnet, dass** der Anteil an Verstärkungsfasern 10 bis 60 Vol.-%, vorzugsweise 15 bis 55 Vol.-%, bezogen auf das Gesamtvolumen des Bauteils.

7. Verfahren gemäß wenigstens einem der vorangehenden Ansprüche, **dadurch gekennzeichnet, dass** die Verstärkungsfasern ausgewählt sind aus der Gruppe bestehend aus Glasfasern, Polymerfasern, Kohlenstoff-Fasern und Keramikfasern, insbesondere Siliziumcarbid (SiC)-Fasern.

8. Verfahren gemäß wenigstens einem der vorangehenden Ansprüche, **dadurch gekennzeichnet, dass** das pulverförmige Material in Form eines Schlickers bereitgestellt wird, wobei der Schlicker vorzugsweise weiterhin Verstärkungsfasern umfasst.

9. Verfahren gemäß wenigstens einem der vorangehenden Ansprüche, **dadurch gekennzeichnet, dass** das pulverförmige Material ausgewählt ist aus der Gruppe bestehend aus Oxiden, Carbiden und Nitriden der Metalle und Übergangsmetalle sowie Mischungen hiervon und, vorzugsweise Siliciumcarbid.

10. Schlicker zur Verwendung in einem Verfahren gemäß wenigstens einem der Ansprüche 1 bis 9, **dadurch gekennzeichnet, dass** der Schlicker folgendes umfasst:
a) Keramik-Partikel, vorzugsweise SiC-Partikel;
b) Verstärkungsfasern; und
c) Binder.

11. Bauteil erhältlich nach einem Verfahren gemäß wenigstens einem der Ansprüche 1 bis 9, **dadurch gekennzeichnet, dass** das Bauteil eine isotrope Orientierung und/oder Verteilung der Verstärkungsfasern aufweist.

12. Vorrichtung zur Durchführung eines Verfahrens gemäß wenigstens einem der Ansprüche 1 bis 9 und/oder zur Herstellung eines Bauteils gemäß Anspruch 11, mit einer Ausgabeeinheit zur Ausgabe eines pulverförmigen Materials und gegebenenfalls Verstärkungsfasern und einer höhenverstellbarer Aufnahmeeinheit zur Aufnahme einer Schicht des pulverförmigen Materials, wobei die Ausgabeeinheit und/oder die Aufnahmeeinheit in der Ebene beweglich sind, vorzugsweise rotierbar sind.

13. Vorrichtung gemäß Anspruch 12, **dadurch gekennzeichnet, dass** die Ausgabeeinheit eine Düse, insbesondere eine Schlitzdüse, oder eine Rakel ist.

14. Vorrichtung gemäß wenigstens einem der Ansprüche 12 oder 13, **dadurch gekennzeichnet, dass** die Vorrichtung weiterhin eine Injektionseinheit zum Injizieren von Verstärkungsfasern in eine oder mehrere Schichten aufweist.

15. Verwendung eines Schlickers zur Herstellung eines faserverstärkten Keramikbauteils gemäß Anspruch 11 mittels eines Verfahren gemäß wenigstens einem der Ansprüche 1 bis 9, wobei der Schlicker
a) Keramikpartikel, vorzugsweise SiC-Partikel;
b) Verstärkungsfasern und
c) Binder
umfasst.
